# EUROPEAN PATENT SPECIFICATION

(11) **EP 3 219 627 B1**
(45) Date of publication and mention of the grant of the patent: **05.12.2018**
(21) Application number: 16160860.9
(22) Date of filing: 17.03.2016
(51) Int. Cl.: B65B 9/067, B65B 29/02, B65B 51/14, B65B 51/30, B65B 61/00, B65B 9/10, B05B 1/00, B65B 29/00, B65B 31/00, B65B 61/28, B65B 63/02, B65B 1/16, B65B 9/20, B05B 1/06, B65B 51/22, B29C 65/08, B29C 65/74, B29C 65/00, B29C 65/02

(54) **BLOWING DEVICE AND SEALING ARRANGEMENT**
BLASVORRICHTUNG UND DICHTUNGSANORDNUNG
DISPOSITIF DE SOUFFLAGE ET AGENCEMENT D'ÉTANCHÉITÉ

(43) Date of publication of application: 20.09.2017
(73) Proprietor: Swedish Match North Europe AB, 118 85 Stockholm (SE)
(72) Inventor: PERSSON, Tony, SE-524 93 Herrljunga (SE); LINDBERG, Jonas, SE-461 55 Trollhättan (SE)
(74) Representative: Valea AB

(56) References cited:
- EP-A2- 2 489 594
- GB-A- 2 485 161
- JP-A- 2002 059 904
- US-A- 4 999 974
- US-A1- 2011 185 687
- US-A1- 2015 342 253

## Description

### TECHNICAL FIELD

The present invention relates to a blowing device for blowing gas through a gas-permeable tubular-shaped packaging material. The present invention further relates to a use of the blowing device, to a sealing arrangement for transversely sealing a gas-permeable tubular-shaped packaging material and to an arrangement for manufacturing of pouched products, e.g. portion-packed pouched oral snuff products, which arrangement comprises such a sealing arrangement. The present invention also relates to a method for transversely sealing a gas-permeable tubular-shaped packaging material and to a method for manufacturing a pouched product, e.g. a portion-packed pouched oral smokeless tobacco product, such as snus.

### BACKGROUND

An example of a product utilizing a gas-permeable packaging material is a portion-packed pouched oral smokeless tobacco product. The packaging material is gas-permeable and may in addition be liquid-permeable. As an example, the packaging material of a pouched smokeless tobacco product can be penetrated by saliva when the product is used orally. Hence, the packaging material may be suitable for oral use by a human being. Another example is a tea bag, for which it is desirable that the water can penetrate the packaging material. Hence, the packaging material may be suitable for use in a liquid, such as water. Other examples of products comprising a gas-permeable packaging material are hygiene products, e.g. a sanitary napkin or a diaper.

Pouched smokeless tobacco products may be produced by measuring portions of the smokeless tobacco composition and inserting the portions into a nonwoven tube.

US 4,703,765 discloses a device for packaging precise amounts of finely divided tobacco products, such as snuff tobacco or the like, in a tubular packaging material into which snuff portions are injected via a fill tube. Downstream from the tube, welding means are positioned for transverse sealing of the packaging material and also cutting means for severing the packaging material in the area of the transverse seal to thus form discrete or individual portion packages.

EP 2 428 450 B1 relates to a dosing method as well as to a dosing device, in particular for dosing snus or the like, wherein a portion of tobacco is filled into a dosing chamber of a dosing device and then blown out of the dosing chamber by means of blow-out air to which water vapour has been added.

US 8122893 B2 discloses a machine for manufacturing of portion-packed pouched oral smokeless tobacco products. The machine comprises an intermittently rotatable dispensing disc with peripheral cavities, a station at which each cavity is filled with a given quantity of tobacco equivalent to a single portion, a push rod mechanism by which the portions of tobacco are ejected from each cavity of the disc at a transfer station, and a connecting duct through which the portion of tobacco ejected by the push rod from each cavity passes directly to a wrapping station where the pouches are formed, filled with the tobacco product and sealed.

Patent document JP 2002 059904 discloses a bag-making and filling machine for a powder and granular substance. A packaging film formed in a cylinder is heat-sealed by a pair of heater blocks for forming into a bag, and the machine supplies the powder and granular substance to the film via a cylindrical funnel tube. The machine comprises a pair of destaticizers which are oppositely placed across a center axis of the funnel tube. The destaticizer includes a plurality of discharge nozzles for discharging ions. The ions are discharged from the nozzles toward a tip of the tube so that the powder and granular substance, which is to be deposit to the tip, is destaticized.

Patent document US 2011/185687 A1 discloses an apparatus for wrapping an object with a film. The apparatus has a film-feed head having a drive for pulling the film from a supply and feeding it in a feed direction through the head toward an object to be wrapped with the film and a pull-down device downstream in the direction from the head for drawing the film around the object. A blower directs a stream of air in the feed head parallel and immediately adjacent to the film and in the feed direction so as to entrain the film in the direction.

### SUMMARY

The object of the present disclosure is to overcome or ameliorate at least one of the disadvantages of the prior art, or to provide a useful alternative.

The object above may be achieved by the subject-matter of claim 1. Embodiments are set forth in the appended dependent claims, in the following description and in the drawings.

The present invention relates to a blowing device for blowing gas through a gas-permeable tubular-shaped packaging material. The blowing device comprises at least one gas nozzle, adapted to blow gas from an outside of the tubular-shaped packaging material through the tubular-shaped packaging material, and a guiding member, wherein the guiding member comprises a web passage having a surface adapted to face the tubular-shaped packaging material, such that the web passage surrounds or substantially surrounds the tubular-shaped packaging material.

The gas is preferably pressurized. The gas may be air, preferably pressurized air. The blowing device may comprise a gas inlet, which is connected to a gas source, such as pressurized air.

The packaging material may be made of a nonwoven material, e.g. comprising viscose, optionally including an acrylic polymer that acts as binder in the nonwoven material and provides for thermo-welding of pouches during manufacturing thereof. Nonwovens are fabrics that are neither woven nor knitted. Methods for the manufacturing of nonwoven, as well as suitable polymer materials for the nonwoven, are commonly known in the art.

The packaging material is tubular-shaped such that it can retain a filling material in the inside of the tubular shape. The tubular shape has a closed circumference and may have a circular, oval, elliptic, square, rectangular or other polygonal cross-section.

The filling material may comprise a pulverulent material, such as a smokeless tobacco or tobacco-free material, which may be nicotine-containing or nicotine free, which may also be referred to as filling composition or snuff composition. As an alternative, the filling material may be tea or another food product, or a content of a hygiene product.

By the term "pulverulent material" as used herein is meant any material in the form of particles, granules, grinds, plant fragments, short fibres, flakes etc.

Since the packaging material is gas-permeable, the gas can be blown through the packaging material to influence the filling material located within the tubular-shaped packaging material, e.g. to displace the filling material in relation to the packaging material.

The packaging material is intended for a pouched product. A pouched product comprises filling material wrapped in the packaging material, such that the packaging material encloses the filling material. The pouched product may be portion-packed, i.e. the product comprises an amount of the filling material suitable for a portion. A portion-packed pouched product comprises a portion of the filling material wrapped in a portion of the packaging material, such that the packaging material encloses the portion of the filling material. The pouched product may be a portion-packed smokeless tobacco product or non-tobacco snuff product.

The pouched product is commonly provided with a transverse seal at either end, such that the sealed product has a pillow-like shape, e.g. having a general square or rectangular shape when seen from above. The transverse seal is substantially perpendicular to a direction of travel of the tubular-shaped packaging material. The pouched product may further, as an option, be provided with a longitudinal seal, which is substantially parallel to the direction of travel of the tubular-shaped packaging material. Commonly, the tubular-shaped packaging material is first longitudinally sealed to form a circumferentially closed tubular shape and then transversely sealed.

By the term "tobacco" as used herein is meant any part, e.g., leaves, stems, and stalks, of any member of the genus Nicotiana. The tobacco may be whole, shredded, threshed, cut, ground, cured, aged, fermented, or treated otherwise, e.g., granulated or encapsulated.

The term "tobacco material" is used herein for tobacco leaves or parts of leaves, such as lamina and stem. The leaves and parts of leaves may be finely divided or disintegrated, such as ground, cut, shredded or threshed, and the parts of leaves may be blended in defined proportions in the tobacco material.

"Oral" and "oral use" is in all contexts used herein as a description for use in the oral cavity of a human, such as buccal placement.

Pouched oral smokeless tobacco products are normally sized and configured to fit comfortably and discreetly in a user's mouth between the upper or lower gum and the lip. In general, pouched oral smokeless tobacco products have a generally rectangular shape. Some typical shapes (length x width) of commercially available pouched oral smokeless tobacco products are, for instance, 35 mm x 20 mm, 34/35 mm x 14 mm, 33/34 mm x 18 mm, and 27/28 mm x 14 mm. Each pouched oral snuff products may have a maximum length within the range of from 25 mm to 35 mm along the longitudinal direction of the product and a maximum width within the range of from 12 mm to 20 mm along the transverse direction of the product. The thickness, i.e. height, of the pouched product is normally within the range of from 2 mm to 8 mm. The total weight of commercially available pouched oral smokeless tobacco products are typically within the range from about 0.3 g to about 3.5 g, such as from about 0.5 g to 1.7 g, per pouched product.

The guiding member preferably has a shape which helps to guide the tubular-shaped packaging material including filling material through the web passage. It is therefore desirable that the entrance of the web passage does not have any sharp corner, on which the tubular-shaped packaging material may catch. The web passage of the guiding member may e.g. be conical, cylindrical or funnel-shaped.

The tubular-shaped packaging material is intended to pass through the web passage of the guiding member. In the general case, with a web passage of an arbitrary cross-section and a tubular-shaped packaging material of the same or another arbitrary cross-section, the web passage has an inner circumference which is larger than an outer circumference of the tubular-shaped packaging material allowing the tubular-shaped packaging material to pass the web passage of the guiding member without wrinkling.

The web passage of the guiding member may have a circular cross-sectional shape or any other suitable shape, such as an oval, elliptic, square, rectangular or other polygonal cross-sectional shape. The cross-sectional shape of the web passage may be selected to impart the tubular-shaped packaging material with a particular corresponding shape, such as a circular cross-sectional shape or a flattened tube shape. The outer circumference of the tubular-shaped packaging material is for this comparison determined with the filling material located inside it.

If the web passage has a circular cross-section, the web passage preferably has a smallest diameter which is larger than the diameter of the tubular-shaped packaging material, e.g. within the range of from 2 mm to 10 mm larger, preferably within the range of from 4 mm to 7 mm larger, allowing the tubular-shaped packaging material to pass the web passage of the guiding member without wrinkling. The diameter of the tubular-shaped packaging material is for this comparison determined with the filling material located inside it.

The at least one gas nozzle may be directed at an angle α in relation to a direction of travel of the tubular-shaped packaging material, wherein the angle α fulfils the requirement 0° < α ≤ 90°, preferably 1 ° ≤ α ≤ 60°, more preferably 3° < α ≤ 30°, most preferably 5° ≤ α ≤ 15°. These values of angle α have been found beneficial to obtain the desired effect that the gas is blown though the tubular-shaped packaging material in order to be able to influence the filling material. Further the gas flow of the blown gas also influences the filling material inside the tubular-shaped packaging material downstream of where the gas hits the tubular-shaped packaging material, such that the filling material is evenly distributed or substantially evenly distributed in the tubular-shaped packaging material, resulting in that the pouched product has a uniform or substantially uniform appearance, e.g. having a similar thickness at the leading end and at the trailing end.

According to a non-claimed embodiment, the blowing device may comprise a plurality of gas nozzles, which may be distributed along a circumference of the web passage in the guiding member, such that the gas nozzles are distributed around the circumference of the web passage. The gas nozzles may be comprised in or attached to the guiding member. At least two of the gas nozzles may be directed in different directions. Preferably, the gas nozzles are evenly distributed along the circumference of the web passage. One, two, three, four, five, six, seven, eight, nine, ten or more gas nozzles may be provided. If more than one gas nozzle is used, they may have different angles in relation to the direction of travel of the tubular-shaped packaging material. However, it is preferred that at least one of them, preferably all, fulfils the above requirement for the angle α.

According to the invention, a single gas nozzle is adapted to surround or substantially surround the tubular-shaped packaging material. The gas nozzle may have a circular, oval, elliptic, square, rectangular or other polygonal cross-section. The cross-section may mimic that of the tubular-shaped packaging material. Further a plurality of segment-shaped gas nozzles may surround or substantially surround the tubular-shaped packaging material.

An inner side wall of the gas nozzle may at least partly comprise or be constituted by a portion of the guiding member forming the web passage. An outer side wall of the gas nozzle may be formed by a portion of a housing member. The housing member may form a chamber for the gas together with the guiding member and one or more optional additional members of the blowing device.

The inner side wall and/or the outer side wall of the gas nozzle may be provided with one or more ridges and/or grooves. A ridge is a protrusion, while a groove is a depression in the side wall. The ridges and/or grooves may help to guide the gas flow in the gas nozzle and thereby also influence the gas flow after the gas has left the nozzle, e.g. by increasing or decreasing turbulence. The ridges and/or grooves may be evenly distributed around a circumference of the gas nozzle. The ridges and/or grooves may divide the gas nozzle into a number of subnozzles.

The blowing device may comprise a slot connecting the web passage with an outside of the blowing device. This may help when threading the tubular-shaped packaging material through the web passage. In that case, a surrounding gas nozzle may comprise a corresponding slot.

The present invention also relates to a use of the blowing device described herein for blowing gas from an outside of a tubular-shaped packaging material through the tubular-shaped packaging material. Thereby it is possible to displace a filling material located inside the tubular-shaped packaging material in relation to the packaging material, e.g. in order to remove filling material from a seal region of the packaging material. The seal region is a portion of the tubular-shaped packaging material, in which a transverse seal is to be located.

The present invention also relates to a sealing arrangement for transversely sealing a gas-permeable tubular-shaped packaging material according to claim 9. The sealing arrangement comprises a sealing device for providing the tubular-shaped packaging material with a transverse seal, and a blowing device comprising at least one gas nozzle arranged to blow a gas from an outside of the tubular-shaped packaging material through the tubular-shaped packaging material, wherein the blowing device is arranged upstream of the sealing device with the gas nozzle adapted to blow the gas onto and through the tubular-shaped packaging material, such that the gas hits the tubular-shaped packaging material at or adjacent to the sealing device.

The object of the at least one gas nozzle is to be able to remove filling material present in the seal region and move it away from the seal region. Hence the distance between the blowing device and the sealing device may be influenced by one or more parameters relating to the sealing arrangement, the packaging material, the filling material and/or the gas. The blowing device may e.g. be located within a range of from 0 mm to 50 mm upstream of the sealing device, preferably within a range of from 0 mm to 30 mm upstream of the sealing device, more preferably within a range of from 0 mm to 10 mm upstream of the sealing device, most preferably within a range of from 0 mm to 5 mm upstream of the sealing device. These locations will result in that the gas hits the tubular-shaped packaging material at or adjacent to the sealing device.

Since the seal region is cleaned from filling material, if any, before providing the transverse seal, the risk of trapping any filling material in the transverse seal is avoided, or at least reduced. Thereby the transverse seal will be stronger. The transverse seal will further be neater and more aesthetically appealing, since it looks better. There is also a possible to increase machine speed.

The blowing device of the sealing arrangement may be the blowing device of the invention described herein. As an alternative or a complement, the blowing device may comprise one or more gas nozzles forming separate bodies, i.e. not being attached to a guiding member. However, they preferably fulfil the angle requirement given above.

The transverse seal is angled in relation to the direction of travel of the tubular-shaped packaging material. The transverse seal forms an angle within the range of 80° to 100° to the direction of travel, e.g. about 90°.

The tubular-shaped packaging material may, as an option, comprise a longitudinal seal. The longitudinal seal helps to retain the packaging material in the tubular shape, and may comprise a thermo-weld, an ultrasonic weld and/or an adhesive. Typically the longitudinal seal forms an angle within the range of -10° to 10° to the direction of travel, preferably substantially coinciding with the direction of travel. As an alternative, the tubular-shaped packaging material may be produced directly as a tubular shape.

Thermo-welding or ultrasonic welding at least partially softens or melts a thermoplastic component in the packaging material. Thereby a seal may be formed between two adjacent surfaces of the packaging material.

As mentioned above, the pouched product may be a portion-packed smokeless tobacco product or non-tobacco snuff product and the filling material may comprise a smokeless tobacco or tobacco-free material, which may be nicotine-containing or nicotine free.

The sealing arrangement may be adapted to be displaced together with the tubular-shaped packaging material in the direction of travel of the tubular-shaped packaging material for a predefined distance and then to return, thereby moving in a longitudinally reciprocating way, i.e. in a direction generally coinciding with the direction of travel of the tubular-shaped packaging material. Thereby the sealing device and the blowing device move at the same speed as the tubular-shaped packaging material and consequently they are stationary in relation to the advancing tubular-shaped packaging material resulting in that the transverse seal can be provided during a longer time span. The length of the time span depends on the speed of the tubular-shaped packaging material and for how long distance the sealing arrangement follows the tubular-shaped packaging material. The transverse seal may be applied by thermo-welding or ultrasonic welding. It would also be possible that only the sealing device is adapted to be displaced together with the tubular-shaped packaging material.

The sealing device may comprise a first sealing bar and a second sealing bar, whereof at least one is heated. The tubular-shaped packaging material passes between the first sealing bar and second sealing bar such that they operate from opposite sides of the tubular-shaped packaging material in order to form the transverse seal in the seal region. The first sealing bar and the second sealing bar may be arranged to be displaced together with the tubular-shaped packaging material in the direction of travel in a longitudinally reciprocating way. The first sealing bar and second sealing bar may further be arranged such that at least one of them may move in a laterally reciprocating way in relation to the tubular-shaped packaging material, i.e. towards and away from the tubular-shaped packaging material in a direction generally perpendicular to the direction of travel of the tubular-shaped packaging material.

As an alternative, or a complement, the sealing device may comprise a sonotrode and an anvil for ultrasonic welding. Correspondingly to the first sealing bar and second sealing bars, the sonotrode and the anvil may be arranged to be displaced together with the tubular-shaped packaging material in the direction of travel in a longitudinally reciprocating way and/or to move in the laterally reciprocating way.

If the first sealing bar and the second sealing bar are adapted to move both longitudinally reciprocating and laterally reciprocating, they may follow a rectangular or square path, repeating their movement in a cyclic way.

The present invention also relates to an arrangement for manufacturing of pouched products, which comprise a gas-permeable packaging material enclosing a filling material. The arrangement comprises a first feeding unit for supplying an advancing web of the packaging material, a second feeding unit for supplying the filling material to the advancing web, an enclosing unit for arranging the web of packaging material in a tubular shape, thereby forming a tubular-shaped packaging material and a sealing arrangement as disclosed herein for transversely sealing the tubular-shaped packaging material.

The enclosing unit may be located upstream or downstream of the second feeding unit. The enclosing unit may comprise a rigid tube, e.g. made of metal or plastics, around which the advancing web of the packaging material is formed to a tubular shape. The filling material may in that case be fed through the rigid tube of the enclosing unit.

As an option, the arrangement may comprise a longitudinal sealing device for providing the arranged packaging material with a longitudinal seal, e.g. by means of thermo-welding or an adhesive. The longitudinal sealing device may be located at or downstream of the enclosing unit, such that the longitudinal sealing device longitudinally seals the tubularly arranged packaging material. The longitudinal sealing device may work against the rigid tube of the enclosing unit.

The sealing arrangement for transversely sealing the tubular-shaped packaging material, as described herein, is located downstream of the enclosing unit and the optional longitudinal sealing device. The blowing device is thereby located downstream of the second feeding unit and upstream of the sealing device.

The arrangement may further comprise a cutting device, which is adapted to separate a pouched product from the following pouched product once the transverse seal has been provided. The cutting device may be combined with the sealing arrangement for transversely sealing, e.g. such that the cutting is performed when sealing. By using the sealing arrangement as described herein, there is thereby less risk or no risk of cutting through filling material, which may contribute to a better durability of the cutting device.

If utilizing a web packaging material which already has a tubular shape, e.g. having been manufactured in that shape, the enclosing unit and the optional longitudinal sealing device may be dispensed with.

The arrangement may comprise a pulling unit located downstream of the sealing arrangement, preferably at a distance from the sealing arrangement substantially corresponding to a length of one of the pouched products along the direction of travel. This distance may be in the range of from 15 mm to 50 mm, preferably in the range of from 25 mm to 40 mm.

The pulling unit may comprise a nip between a pair of rollers arranged to pull the pouched product in the direction of travel. Thereby the web is tensioned in a controllable way in order to make a separation of the pouched product from the following pouched product easier. The distance between the nip and the cutting device may roughly correspond to the length of the pouched product in the direction of travel. Hence, if the arrangement is utilized for manufacturing pouched products of different sizes, the distance is preferably adjustable.

The present invention also relates to a method for transversely sealing a gas-permeable tubular-shaped packaging material, which encloses a filling material. The method comprises removing filling material from a seal region of the tubular-shaped packaging material, and providing a transverse seal to the tubular-shaped packaging material in the seal region of the tubular-shaped packaging material. Preferably, the filling material is removed from the seal region just before and/or during providing the transverse seal. Purely as an example, if the sealing arrangement moves in the above-mentioned cyclic way and a cycle takes a time t_{cycle} to perform, the removal of filling material may start a time Δt before the start of the sealing, wherein Δt may be in the range of from 0% to 30% of t_{cycle}, preferably in the range of from 0% to 20% of t_{cycle}.

The step of removing filling material from the seal region and/or the step of providing the transverse seal may be performed while the sealing arrangement moves together with the tubular-shaped packaging material, i.e. while following the speed of the tubular-shaped packaging material, e.g. in a way explained herein in conjunction with the description of the sealing arrangement.

The step of removing filling material from the seal region is performed by blowing the filling material away from the seal region, wherein the blowing is performed from an outside of the tubular-shaped packaging material through the tubular-shaped packaging material. Purely as an example, a blowing device as described herein may be utilized.

If blowing, the blowing may be performed by blowing gas at an angle α in relation to a direction of travel of the tubular-shaped packaging material, wherein the angle α fulfils the requirement 0° < α ≤ 90°, preferably 1° ≤ α ≤ 60°, more preferably 3° < α ≤ 30°, most preferably 5° ≤ α ≤ 15°.

The blowing may be performed in a pulsating way. The pulsation frequency may follow the movement of the sealing arrangement described herein. Hence, the pulsation frequency may correspond to the time it takes from when a transverse seal is fully formed until the subsequent transverse seal is fully formed. In that way, a gas pulse may be blown each time just before the transverse sealing starts.

The step of removing filling material from the seal region may in addition or as a complement be performed by vibrating the tubular-shaped packaging material and/or providing a standing wave in the tubular-shaped packaging material.

As mentioned above, the enclosing unit may comprise a rigid tube. In that case, the rigid tube may be vibrated and/or a standing wave may be provided in the rigid tube. As an alternative or a complement, a rigid tube may be provided to surround the tubular-shaped packaging material. In that case, the rigid tube may be vibrated and/or a standing wave may be provided in the rigid tube.

The present invention also relates to a method for manufacturing a pouched product, e.g. a pouched oral snuff product. The method comprises
- supplying and advancing a web of a gas-permeable packaging material,
- supplying a filling material to the advancing web,
- arranging the advancing web in a tubular shape to enclose the filling material, the arranging being performed before or after supplying the filling material,
- as an option, providing the tubularly arranged packaging material with a longitudinal seal, and
- providing the tubular-shaped packaging material with a transverse seal following the method described above.

If utilizing a web packaging material which already has a tubular shape, e.g. having been manufactured in that shape, the steps of arranging the advancing web in a tubular shape and the optional step of providing a longitudinal seal may be dispensed with.

The blowing device, the sealing arrangement and the arrangement for manufacturing and/or the method as described herein are suitable for high-speed manufacturing of pouched products, such as production speeds providing at least 100 pouched products per minute, or at least 150 pouched products per minute, or at least 200 pouched products per minute, or at least 250 pouched products per minute, or at least 300 pouched products per minute.

### BRIEF DESCRIPTION OF THE DRAWINGS

The present invention will hereinafter be further explained by means of non-limiting examples with reference to the appended drawings wherein:
- Fig. 1a-c: illustrate a blowing device according to the invention.
- Fig. 2: illustrates a sealing arrangement according to the invention.
- Fig. 3a-g: illustrate an arrangement and a method for manufacturing of poached products.
- Fig. 4: illustrates a cross-section through a nip of a pulling unit.
- Fig. 5: illustrates an alternative sealing arrangement which is not part of the invention.

It should be noted that the appended drawings are not necessarily drawn to scale and that the dimensions of some features of the present invention may have been exaggerated for the sake of clarity.

### DETAILED DESCRIPTION

The invention will, in the following, be exemplified by embodiments. It should however be realized that the embodiments are included in order to explain principles of the invention and not to limit the scope of the invention, defined by the appended claims. Details from two or more of the embodiments may be combined with each other.

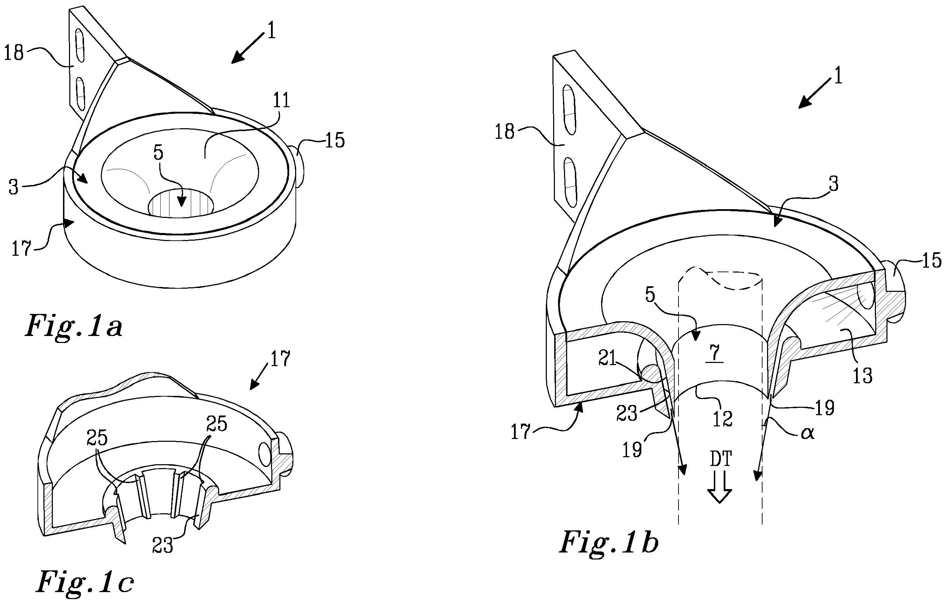

Figures 1a-b illustrate a blowing device 1 according to the invention for blowing gas through a gas-permeable tubular-shaped packaging material. The gas-permeable tubular-shaped packaging material is indicated with dashed lines in Figure 1b. It has a direction of travel indicated by DT. Figure 1a shows a perspective view of the blowing device 1 and Figure 1b shows a perspective cross-sectional view.

The blowing device 1 comprises a guiding member 3 having a web passage 5 with a surface 7 adapted to face the tubular-shaped packaging material such that the web passage 5 surrounds or substantially surrounds the tubular-shaped packaging material. The guiding member 3 is funnel-shaped with the web passage 5 having a first circular opening 11 with a larger diameter than a second circular opening 12. The tubular-shaped packaging material is adapted to pass through the web passage 5. Therefore the web passage 5 has an inner circumference, which is larger than the outer circumference of the tubular-shaped packaging material, e.g. within the range of from 2 mm to 10 mm larger, preferably in the range of from 4 mm to 7 mm larger, allowing the tubular-shaped packaging material to pass through the web passage 5 without wrinkling. By letting the larger first opening 11 face in a direction opposite to the direction of travel DT, it is easy to thread the tubular-shaped packaging material through the web passage 5.

The blowing device 1 further comprises a chamber 13, which is connectable to a source of pressurized gas, e.g. pressurized air, via at least one gas inlet 15. In the illustrated embodiment, the chamber 13 is annularly shaped. A first wall portion of the chamber 13 is formed by the guiding member 3. A second wall portion of the chamber 13 is formed by a housing member 17, such that the guiding member 3 and the housing member 17 together form the blowing device 1 in the illustrated embodiment of Figure 1. The at least one gas inlet 15 is located in the housing member 17. As an option, the walls of the chamber 13 may also be constituted by one or more additional members, and in that case the blowing device may also comprise these one or more additional members.

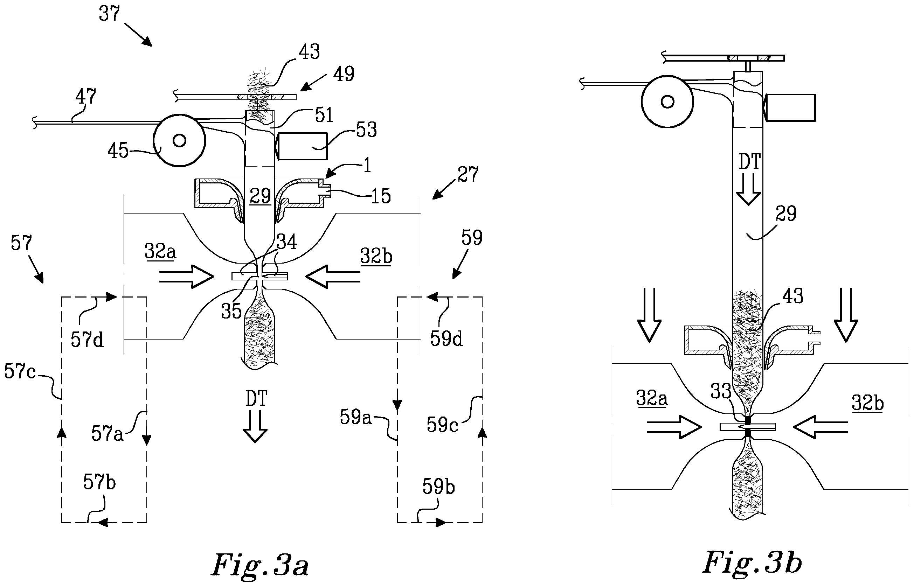

The blowing device 1 may as an option comprise one or more brackets 18, which are intended to be used when mounting the blowing device 1 in an arrangement for manufacturing of pouched products, e.g. portion-packed pouched oral snuff products, like the arrangement 37 described below in conjunction with Figures 3a-g.

The blowing device 1 of the illustrated embodiment comprises an annularly shaped gas nozzle 19. The gas nozzle 19 has a circular shape and surrounds the web passage 5. An inner side wall 21 of the gas nozzle 19 is formed by a portion of the guiding member 3. An outer side wall 23 of the gas nozzle 19 is formed by a portion of the housing member 17. The gas nozzle 19 is directed such that the blown out gas hits the tubular-shaped packaging material at an angle α, wherein the angle α fulfils the requirement 0° < α ≤ 90°, preferably 1° ≤ α ≤ 60°, more preferably 3° < α ≤ 30°, most preferably 5° ≤ α ≤ 15° in relation to the direction of travel DT. In the illustrated embodiment, the angle α is about 10°.

In order to guide the gas flow through the gas nozzle 19, the inner side wall 21 and/or the outer side wall 23 may be provided with ridges and/or grooves. An example of this is illustrated in Figure 1c showing the outer side wall 23 being provided with a plurality of ridges 25, which are evenly distributed around a circumference of the gas nozzle 19. The ridges 25 and/or grooves divide the gas nozzle 19 into a number of subnozzles.

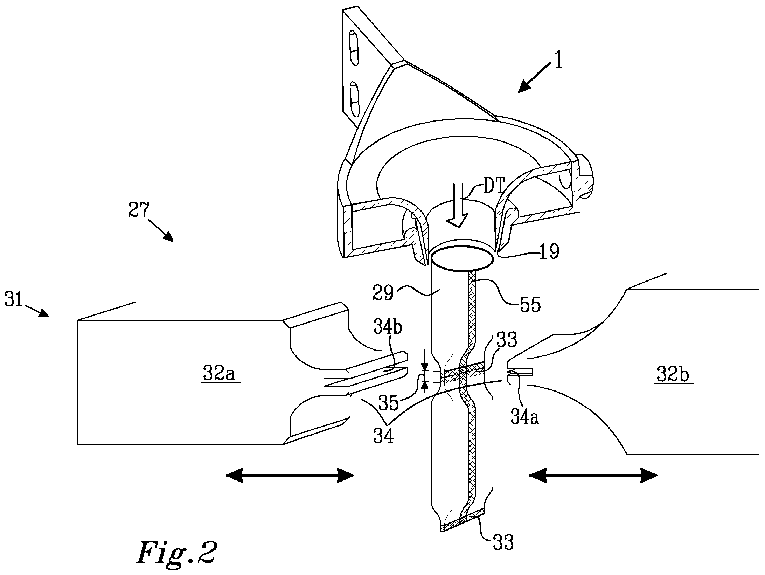

Figure 2 illustrates a sealing arrangement 27 for transversely sealing the gas-permeable tubular-shaped packaging material 29. The sealing arrangement comprises a sealing device 31 for providing the tubular-shaped packaging material 29 with a transverse seal 33 and a blowing device comprising at least one gas nozzle arranged to blow a gas from an outside of the tubular-shaped packaging material 29 through the tubular-shaped packaging material 29. The blowing device may be the blowing device 1 described in conjunction with Figures 1a-c.

The sealing device 31 comprises a first sealing bar 32a and a second sealing bar 32b, whereof at least one is heated. The sealing arrangement 27 is shown in an open non-welding state in Figure 2. During sealing, the first sealing bar 32a and second sealing bar 32b are in contact with the tubular-shaped packaging material 29. The tubular-shaped packaging material 29 is between the first sealing bar 32a and second sealing bar 32b such that they operate from opposite sides of the tubular-shaped packaging material 29 in order to form the transverse seal 33 in a seal region 35. The seal region 35 is a portion of the tubular-shaped packaging material 29, in which the transverse seal 33 is to be located. The transverse seal 33 may be applied by thermo-welding or ultrasonic welding.

The blowing device 1 is arranged upstream of the sealing device 31 with the gas nozzle 19 adapted to blow the gas onto the tubular-shaped packaging material 29, such that the gas hits the tubular-shaped packaging material at or adjacent to the sealing device 31. As mentioned above, the tubular-shaped packaging material 29 is gas-permeable. Therefore the gas from the gas nozzle 19 can be blown through the packaging material 29, such that the gas may help to move filling material, e.g. snus, enclosed in the tubular-shaped packaging material 29 away from the seal region 35. In order to get the best effect, it may be preferred to perform the removal of filling material from the seal region 35 just before and/or during providing the transverse seal 33. Since the seal region 35 is cleaned from filling material, if any, before providing the transverse seal 33, the risk of trapping any filling material in the transverse seal 33 is avoided, or at least reduced. Thereby the transverse seal 33 will be stronger. The transverse seal 33 will further be neater and more aesthetically appealing, since it looks better. There is also a possible to increase machine speed.

The sealing arrangement 27 may further comprise a cutting device 34, which is adapted to separate a pouched product 39 from the following pouched product 39 once the transverse seal 33 has been provided. Preferably the cutting device 34 is combined with the sealing arrangement 27 for transversely sealing, e.g. such that the cutting is performed when sealing. In the illustrated embodiment, the cutting device 34 comprises a knife 34a located in a slot in one of the sealing bars, here illustrated in the second sealing bar 32b. The knife 34a cooperates with a corresponding slot 34b in the other of the two sealing bars, here the first sealing bar 32a. As mentioned above, filling material is removed from the seal region. Thereby there is less risk, or no risk, of cutting through filling material, which may contribute to a better durability of the cutting device 34, in particular of the knife 34a.

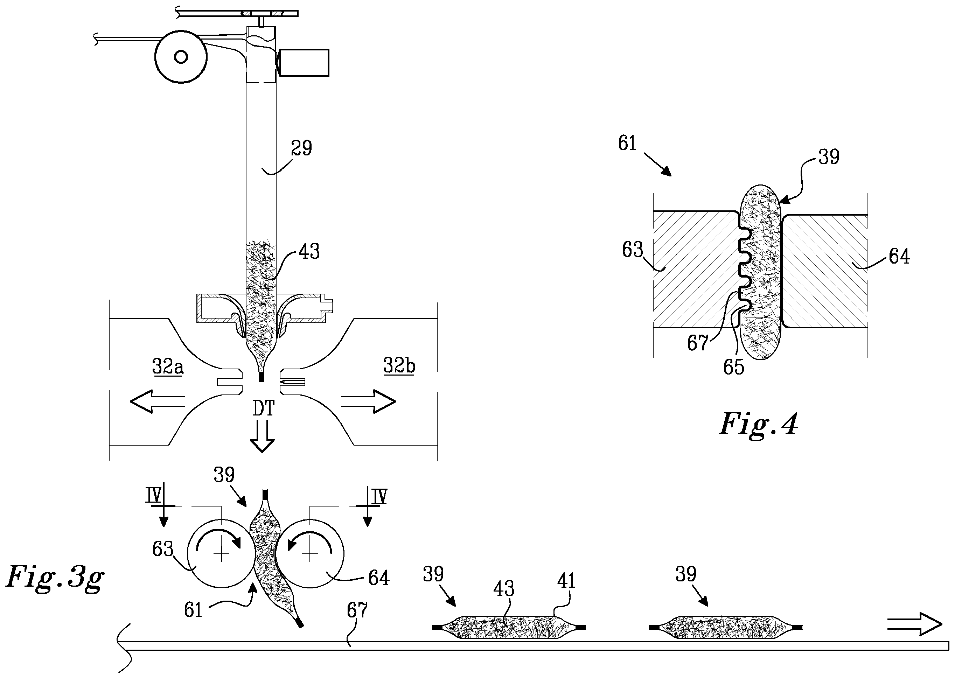

The sealing arrangement 27 may form part of an arrangement 37 for manufacturing of poached products, e.g. portion-packed pouched oral snuff products 39, which comprise a gas-permeable packaging material 41 enclosing a filling material 43. See Figures 3a-g. The product 39 is best seen in Figure 3g.

The arrangement 37 comprises a first feeding unit 45 for supplying an advancing web 47 of the packaging material and a second feeding unit 49 for supplying the filling material 43 to the advancing web 47.

The arrangement 37 further comprises an enclosing unit 51 for arranging the web 47 of packaging material in a tubular shape, thereby forming the tubular-shaped packaging material 29 mentioned above. The enclosing unit 51 may be located upstream or downstream of the second feeding unit 49. In the illustrated embodiment, the enclosing unit 51 comprises a rigid tube, e.g. made of metal or plastics, around which the advancing web 47 of the packaging material is wrapped to form a tubular shape. The filling material 43 may be fed through the rigid tube of the enclosing unit 51.

As an option, the arrangement 37 may comprise a longitudinal sealing device 53 for providing the arranged packaging material with a longitudinal seal 55, e.g. by means of thermo-welding, ultrasonic welding or an adhesive. The longitudinal seal 55 is illustrated in Figure 2. The longitudinal sealing device 53 is located at or downstream of the enclosing unit 51, such that the longitudinal sealing device 53 longitudinally seals the tubularly arranged packaging material. In the illustrated embodiment, the longitudinal sealing device 53 works against the rigid tube of the enclosing unit 51.

The sealing arrangement 27 for transversely sealing the tubular-shaped packaging material, which was described in conjunction with Figure 2, is located downstream of the enclosing unit 51 and the optional longitudinal sealing device 53.

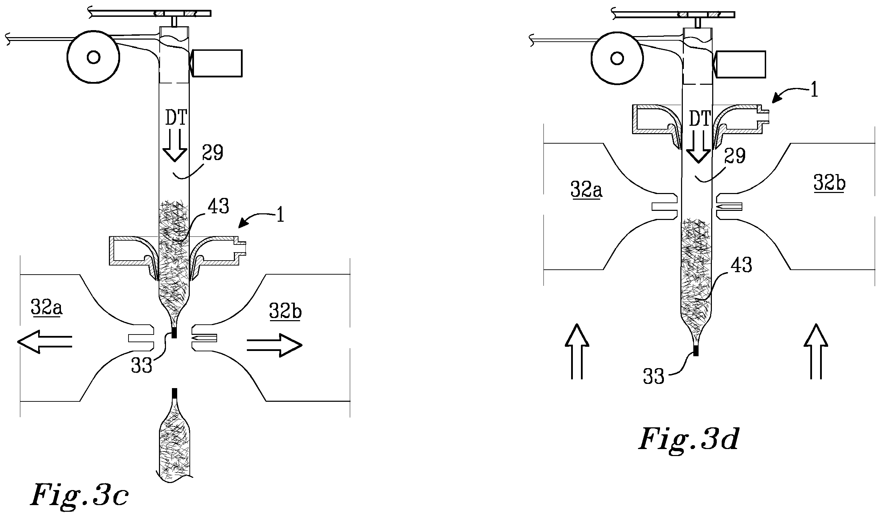

In the illustrated embodiment of the sealing arrangement 27, as seen in Figures 3a-g, the first sealing bar 32a and the second sealing bar 32b are arranged to be displaced in a laterally reciprocating way in relation to the tubular-shaped packaging material 29, i.e. in a direction substantially perpendicular to the direction of travel DT, between a first position, illustrated in Figure 3a, being in contact with the tubular-shaped packaging material 29 and a position, illustrated in Figure 3c, being out of contact with the tubular-shaped packaging material 29.

Further, the first sealing bar 32a and the second sealing bar 32b are adapted to be displaced together with the tubular-shaped packaging material 29 in the direction of travel DT for a predefined distance and then to return, thereby moving in a longitudinally reciprocating way, i.e. in a direction generally coinciding with the direction of travel DT of the tubular-shaped packaging material 29. Preferably, and is shown in the illustrated embodiment, the blowing device 1 accompanies the first sealing bar 32a and the second sealing 32b in this displacement. Thereby the sealing device 31 and the blowing device 1 move at the same speed as the tubular-shaped packaging material 29 and consequently they are stationary in relation to the advancing tubular-shaped packaging material 29 resulting in that the transverse seal 33 can be provided during a longer time span. The length of the time span depends on the speed of the tubular-shaped packaging material 29 and for how long distance the sealing device 31 follows the tubular-shaped packaging material 29. The transverse seal may be applied by thermo-welding or ultrasonic welding.

Since the first sealing bar 32a and the second sealing bar 32b are adapted to move both longitudinally reciprocating and laterally reciprocating, they follow a rectangular or square path, thus repeating their movement in a cyclic way. The first sealing bar 32a moves along a path 57 which has a first portion 57a parallel to and adjacent to the tubular-shaped packaging material 29, a second portion 57b moving the first sealing bar 32a away from the tubular-shaped packaging material 29, a third portion 57c bringing the first sealing bar 32a back upstream and a fourth portion 57d bringing the first sealing bar 32a back into contact with the tubular-shaped packaging material 29. The second sealing bar 32b follows a corresponding path 59, having corresponding portions 59a, 59b, 59c, 59d. See paths 57, 59 illustrated in Figure 3a. The paths 57, 59 are further described below.

Figure 3a illustrates a start of forming a transverse seal. The longitudinal seal 55, see Figure 2, is continuously formed in the advancing tubular-shaped packaging material 29 by the longitudinal sealing device 53. As mentioned above, the longitudinal sealing device 53 is optional. The first sealing bar 32a and the second sealing bar 32b assume the first position, in which they start welding. A portion of the filling material 43 is filled from above into the tubular-shaped packaging material 29. The filling material moves downwards, e.g. by gravity, until it reaches the seal region 35 of the tubular-shaped packaging material 29, which is in the gap between the first sealing bar 32a and the second sealing bar 32b.

The first sealing bar 32a and the second sealing bar 32b move downstream together with the tubular-shaped packaging material 29 while performing the welding along the respective first portions 57a, 59a of their paths. The first sealing bar 32a and the second sealing bar 32b then reaches a second position being downstream of the first position but yet in contact with the tubular-shaped packaging material 29. See Figure 3b. In this position, the tubular-shaped packaging material 29 may be cut by the cutting device 34 leaving an upper transverse seal 33 at the upper edge of the pouched product and a lower transverse seal 33 at the lower edge of the following pouched product.

Thereafter the first sealing bar 32a and the second sealing bar 32b are moved away from the tubular-shaped packaging material 29 along the second portions 57b, 59b of their respective paths until they reach a respective third position, such that they are no longer in contact. The already formed lower transverse seal 33 prevents the portion of the filling material 43 from falling out. See Figure 3c.

As a next step, the first sealing bar 32a and the second sealing bar 32b are moved back upstream along the third portions 57c, 59c of their respective paths to a fourth position being out of contact with the tubular-shaped packaging material 29. See Figure 3d.

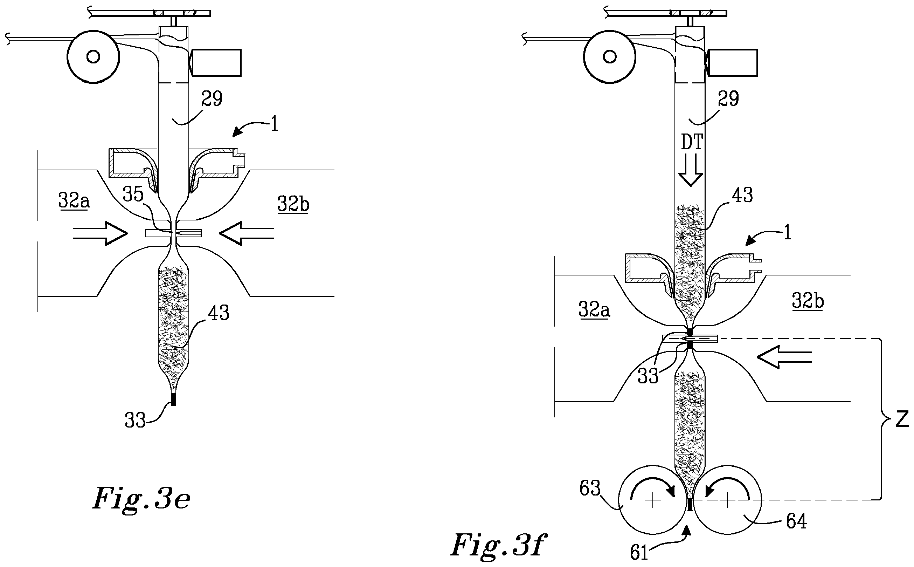

Then the first sealing bar 32a and the second sealing bar 32b are moved back to the first position along the fourth portions 57d, 59d of their respective paths, such that they start forming a new transverse seal. See Figure 3e.

The first sealing bar 32a and the second sealing bar 32b move along the respective first portions 57a, 59a of their paths together with the tubular-shaped packaging material 29 while performing the welding until the first sealing bar 32a and the second sealing bar 32b reach the second position being downstream of the first position but yet in contact with the tubular-shaped packaging material 29. See Figure 3f. The tubular-shaped packaging material 29 is cut by the cutting device 34, leaving an upper transverse seal 33 at the upper edge of the pouched product and a lower transverse seal 33 at the lower edge of the following pouched product, which has been filled by a subsequent portion of the filling material 43.

Thereafter the first sealing bar 32a and the second sealing bar 32b are moved away from the tubular-shaped packaging material 29 along the second portions 57b, 59b of their respective paths until they reach a respective third position, illustrated in Figure 3g, such that they are no longer in contact, as is already described above for Figure 3c. The first sealing bar 32a and the second sealing bar 32b continue to move along their paths 57, 59 described above, while the tubular-shaped packaging material 29 moves in the direction of travel DT.

In order to help separating the tubular-shaped packaging material 29 after the cut, the arrangement 37 may further comprise a pulling unit, illustrated in Figure 3f and 3g as a nip 61 between a pair of rollers 63, 64 arranged to pull the pouched product 39 in the direction of travel DT. Thereby the tubular-shaped packaging material 29 is tensioned in a controllable way in order to make a separation of the pouched product 39 from the following pouched product easier. The distance z between the nip 61 and the cutting device 34 when the sealing device 31 is in the second position, see Figure 3f, roughly corresponds to the length of the pouched product 39 in the direction of travel DT. Hence, if the arrangement 37 is utilized for manufacturing pouched products of different sizes, the distance z is preferably adjustable. After passing the nip 61, the pouched product 39 is placed on a conveyor 67. See Figure 3g.

Figure 4 illustrates a cross-section through the nip 61 as seen from above in Figure 3g. In order to be able to pull the pouched product 39 filled with the portion of the filling material without destroying the pouched product 39 in the nip 61, at least one of the rolls, illustrated as the left-hand roll 63, is provided with a plurality of ridges 65, having interspaces 67 between the ridges 65. The ridges 65 will help to pull the pouched product 39, while the interspaces 67 give room for the filling material 43. Thereby, it is possible to pull the pouched product 39 through the nip 61 without destroying it. There are at least two ridges 65. The other roll 64 may be flat as is illustrated, or it may also comprise ridges.

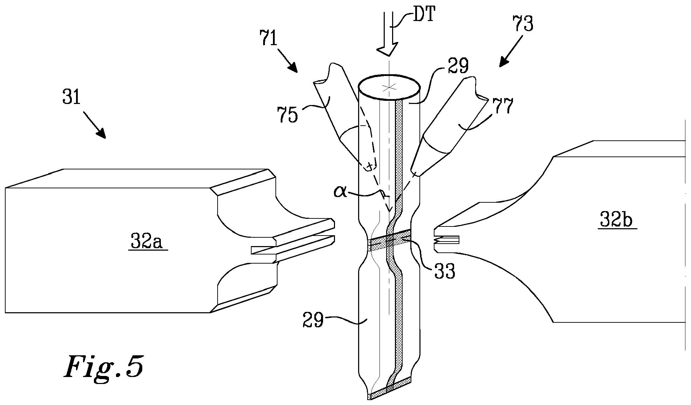

Figure 5 illustrates an alternative sealing arrangement 71 which is not part of the invention. The sealing device 31 is like the one already described above in conjunction with Figure 2. The blowing device 73 of the alternative sealing arrangement 71 comprises two separate gas nozzles 75, 77, which blow onto and through the tubular-shaped packaging material 29 from different directions at opposite sides of the tubular-shaped packaging material 29. Preferably they are directed according to above, such that the gas hits the tubular-shaped packaging material 29 at the angle α being within the ranges described above, in Figure 5 illustrated as about 20°. The gas nozzles 75, 77 may be arranged at a guiding member, not illustrated, which forms a web passage corresponding to the web passage 5 described above. The alternative sealing arrangement 71 may comprise three or more separate gas nozzles 75, 77. They may be evenly distributed along the circumference of the tubular-shaped packaging material 29.

In the illustrated embodiments, the filling material 43 is placed in the tubular-shaped packaging material 29 as a portion of filling material, as commonly known in the art. See e.g. the above-mentioned patent document US 4,703,765. In this case, the direction of travel DT is preferably vertical, as in the illustrated embodiments.

Alternatively, the filling material may be placed on a planar web of packaging material as a portion before the planar web is formed to a tubular-shape, e.g. according to a technique called "NYPS" described in US 6,135,120. Thereafter the packaging material is wrapped around the already placed snuff portion to form the tubular-shaped packaging material, thereby enclosing the snuff portion. The arranged packaging material is then sealed by a longitudinal seal. Both lateral edges of the packaging web may face in the same direction, e.g. upwards, such that a fin seal is made. Alternatively, the lateral edge portions of the packaging web may overlap, such that a lap seal is created. A combined fin and lap seal may be formed by letting the lateral edges of the packaging web face in the same direction forming a fin, optionally forming a fin seal in the fin, and then lap sealing the fin to the outer surface of the pouch. In this case, the direction of travel DT may preferably be horizontal.

Further modifications of the invention within the scope of the appended claims are feasible. As such, the present invention should not be considered as limited by the embodiments and figures described herein. Rather, the full scope of the invention should be determined by the appended claims, with reference to the description and drawings.

## Claims

1. A blowing device (1) for blowing gas through a gas-permeable tubular-shaped packaging material (29),
said blowing device (1) comprises
- at least one gas nozzle (19), adapted to blow gas from an outside of said tubular-shaped packaging material (29) through said tubular-shaped packaging material (29), and
- a guiding member (3),
wherein said guiding member (3) comprises a web passage (5) having a surface (7) adapted to face said tubular-shaped packaging material (29), such that said web passage (5) surrounds or substantially surrounds said tubular-shaped packaging material (29),
**characterized in that**
said gas nozzle (19) is adapted to surround or substantially surround said tubular-shaped packaging material (29).

2. The blowing device (1) according to claim 1, wherein said at least one gas nozzle (19) is directed at an angle α in relation to a direction of travel (DT) of said tubular-shaped packaging material (29), wherein said angle α fulfils the requirement 0° < α ≤ 90°, preferably 1° ≤ α ≤ 60°, more preferably 3° < α ≤ 30°, most preferably 5° ≤ α ≤ 15°.

3. The blowing device (1) according to any one of the preceding claims, wherein said web passage (5) of said guiding member (3) is conical, cylindrical or funnel-shaped.

4. The blowing device (1) according to any one of the preceding claims, wherein said gas nozzle (19) has a circular, oval or elliptic shape.

5. The blowing device (1) according to any one of the preceding claims, wherein an inner side wall (21) of said gas nozzle (19) is at least partly constituted by a portion of said guiding member (3) forming said web passage (5).

6. The blowing device (1) according to any one of the preceding claims, wherein said inner side wall (21) and/or an outer side wall (23) of said gas nozzle (19) is provided with one or more ridges (25) and/or grooves.

7. The blowing device (1) according to any one of the preceding claims, wherein said blowing device (1) comprises a slot connecting said web passage with an outside of said blowing device (1).

8. A use of a blowing device (1) according to any one of the preceding claims for blowing gas from an outside of a tubular-shaped packaging material (29) through said tubular-shaped packaging material (29).

9. A sealing arrangement (27, 71) for transversely sealing a gas-permeable tubular-shaped packaging material (29), said sealing arrangement (27, 71) comprising
- a sealing device (31) for providing said tubular-shaped packaging material (29) with a transverse seal (33), and
- a blowing device (1, 73) comprising at least one gas nozzle (19; 75, 77) arranged to blow a gas from an outside of said tubular-shaped packaging material (29) through said tubular-shaped packaging material (29),
**characterized in that**
said gas nozzle (19) is adapted to surround or substantially surround said tubular-shaped packaging material (29), and
said blowing device (1, 73) is arranged upstream of said sealing device (31) with said gas nozzle (19; 75, 77) adapted to blow said gas onto said tubular-shaped packaging material (29), such that said gas hits said tubular-shaped packaging material (29) at or adjacent to said sealing device (31).

10. The sealing arrangement (27, 71) according to claim 9, being adapted to be displaced together with said tubular-shaped packaging material (29) in said direction of travel (DT) of said tubular-shaped packaging material (29).

11. An arrangement (37) for manufacturing of pouched products (39), e.g. pouched oral snuff products, said pouched products (39) comprising a gas-permeable packaging material (41) enclosing a filling material (43), said arrangement comprising
- a first feeding unit (45) for supplying an advancing web (47) of said packaging material,
- a second feeding unit (49) for supplying said filling material (43) to said advancing web (47),
- an enclosing unit (51) for arranging said web (47) of packaging material (29) in a tubular shape, thereby forming a tubular-shaped packaging material (29),
- as an option, a longitudinal sealing device (53) for providing said arranged packaging material (29) with a longitudinal seal (55), and
- a sealing arrangement (27, 71) according to claim 9 or 10 for transversely sealing said tubular-shaped packaging material (29).

12. A method for transversely sealing a gas-permeable tubular-shaped packaging material (29), which encloses a filling material (43), said method comprising
a) removing filling material (43) from a seal region (35) of said tubular-shaped packaging material (29) by blowing said filling material (43) away from said seal region (35), wherein said blowing is performed from an outside of said tubular-shaped packaging material (29) through said tubular-shaped packaging material (29),
b) providing a transverse seal (33) to said tubular-shaped packaging material (29) in said seal region (35) of said tubular-shaped packaging material (29), preferably step a being performed just before and/or during performing step b,
**characterized in that**
said blowing is performed by a gas nozzle (19) surrounding or substantially surrounding said tubular-shaped packaging material (29).

13. The method according to claim 12, wherein step b, or steps a and b, is/are performed while moving together with said advancing tubular-shaped packaging material (29).

14. The method according to claim 12 or 13, wherein said blowing is performed by blowing gas at an angle α in relation to a direction of travel (DT) of said tubular-shaped packaging material (29), wherein said angle α fulfils the requirement 0° < α ≤ 90°, preferably 1° ≤ α ≤ 60°, more preferably 3° < α ≤ 30°, most preferably 5° ≤ α ≤ 15°.

15. The method according to any one of claims 12-14, wherein said blowing is performed in a pulsating way.

16. The method according to any one of claims 12-15, wherein step a in addition is performed by vibrating said tubular-shaped packaging material (29) and/or providing a standing wave in said tubular-shaped packaging material (29).

17. A method for manufacturing a pouched product (39), e.g. a pouched oral snuff product,
said method comprising
- supplying and advancing a web (47) of a gas-permeable packaging material,
- supplying a filling material (43) to said advancing web (47),
- arranging said advancing web (47) in a tubular shape to enclose said filling material (43), said arranging being performed before or after supplying said filling material (43),
- as an option, providing said tubularly arranged packaging material (29) with a longitudinal seal (55), and
- providing said tubular-shaped packaging material (29) with a transverse seal (33) following the method according to any one of claims 12-16.

## Patentansprüche

1. Blasvorrichtung (1) zum Blasen von Gas durch ein gasdurchlässiges, rohrförmiges Verpackungsmaterial (29) hindurch,
die Blasvorrichtung (1) umfassend
- mindestens einen Gasstutzen (19), der dafür angepasst ist, Gas von einer Außenseite des rohrförmigen Verpackungsmaterials (29) durch das rohrförmige Verpackungsmaterial (29) hindurch zu blasen, und
- ein Führungsglied (3),
wobei das Führungsglied (3) einen Netzdurchgang (5) umfasst, der eine Oberfläche (7) aufweist, die dafür angepasst ist, dem rohrförmigen Verpackungsmaterial (29) zugewandt zu sein, sodass der Netzdurchgang (5) das rohrförmige Verpackungsmaterial (29) umgibt oder im Wesentlichen umgibt,
**dadurch gekennzeichnet, dass**
der Gasstutzen (19) dafür angepasst ist, das rohrförmige Verpackungsmaterial (29) zu umgeben oder im Wesentlichen zu umgeben.

2. Blasvorrichtung (1) nach Anspruch 1, wobei der mindestens eine Gasstutzen (19) unter einem Winkel α in Bezug auf eine Laufrichtung (DT) des rohrförmigen Verpackungsmaterials (29) ausgerichtet ist, wobei der Winkel α die Vorgabe 0° < α ≤ 90°, vorzugsweise 1° ≤ α ≤ 60°, nochmals bevorzugt 3° < α ≤ 30°, besonders bevorzugt 5° ≤ α ≤ 15° erfüllt.

3. Blasvorrichtung (1) nach einem der vorstehenden Ansprüche, wobei der Netzdurchgang (5) des Führungsglieds (3) konisch, zylindrisch oder trichterförmig ist.

4. Blasvorrichtung (1) nach einem der vorstehenden Ansprüche, wobei der Gasstutzen (19) eine kreisförmige, ovale oder elliptische Form aufweist.

5. Blasvorrichtung (1) nach einem der vorstehenden Ansprüche, wobei eine innere Seitenwand (21) des Gasstutzens (19) mindestens teilweise durch einen Abschnitt des Führungsglieds (3) ausgebildet ist, das den Netzdurchgang (5) bildet.

6. Blasvorrichtung (1) nach einem der vorstehenden Ansprüche, wobei die innere Seitenwand (21) und/oder eine äußere Seitenwand (23) des Gasstutzens (19) mit einem oder mehreren Graten (25) und/oder Rillen bereitgestellt ist.

7. Blasvorrichtung (1) nach einem der vorstehenden Ansprüche, wobei die Blasvorrichtung (1) einen Schlitz umfasst, der den Netzdurchgang mit einer Außenseite der Blasvorrichtung (1) verbindet.

8. Verwendung einer Blasvorrichtung (1) nach einem der vorstehenden Ansprüche zum Blasen von Gas von einer Außenseite eines rohrförmigen Verpackungsmaterials (29) durch das rohrförmige Verpackungsmaterial (29) hindurch.

9. Dichtungsanordnung (27, 71) zum quer Abdichten eines gasdurchlässigen, rohrförmigen Verpackungsmaterials (29), die Dichtungsanordnung (27, 71) umfassend
- eine Dichtungsvorrichtung (31) zum Bereitstellen des rohrförmigen Verpackungsmaterials (29) mit einer Querdichtung (33), und
- eine Blasvorrichtung (1, 73), die mindestens einen Gasstutzen (19; 75, 77) umfasst, der dafür angeordnet ist, Gas von einer Außenseite des rohrförmigen Verpackungsmaterials (29) durch das rohrförmige Verpackungsmaterial (29) hindurch zu blasen,
**dadurch gekennzeichnet, dass**
der Gasstutzen (19) dafür angepasst ist, das rohrförmige Verpackungsmaterial (29) zu umgeben oder im Wesentlichen zu umgeben und
die Blasvorrichtung (1, 73) stromaufwärts der Dichtungsvorrichtung (31) angeordnet ist, wobei der Gasstutzen (19; 75, 77) dafür angepasst ist, Gas auf das rohrförmige Verpackungsmaterial (29) zu blasen, sodass das Gas an der oder benachbart zu der Dichtungsvorrichtung (31) auf das rohrförmige Verpackungsmaterial (29) auftrifft.

10. Dichtungsvorrichtung (27, 71) nach Anspruch 9, die dafür angepasst ist, zusammen mit dem rohrförmigen Verpackungsmaterial (29) in die Laufrichtung (DT) des rohrförmigen Verpackungsmaterials (29) verlagert zu werden.

11. Anordnung (37) zum Herstellen von im Beutel verpackten Produkten (39), z.B. im Beutel verpackten oralen Schnupfprodukten, wobei die im Beutel verpackten Produkte (39) ein gasdurchlässiges Verpackungsmaterial (41) umfassen, das ein Füllmaterial (43) umschließt, die Anordnung umfassend
- eine erste Beschickungseinheit (45) zum Zuführen eines sich vorwärtsbewegenden Netzes (47) des Verpackungsmaterials,
- eine zweite Beschickungseinheit (49) zum Zuführen des Füllmaterials (43) an das sich vorwärtsbewegende Netz (47),
- eine Umschließungseinheit (51) zum Anordnen des Netzes (47) von Verpackungsmaterial (29) in eine rohrförmige Form und dadurch Bilden eines rohrförmigen Verpackungsmaterials (29),
- als eine Option, eine Längsdichtungsvorrichtung (53) zum Bereitstellen des angeordneten Verpackungsmaterials (29) mit einer Längsdichtung (55) und
- eine Dichtungsanordnung (27, 71) nach Anspruch 9 oder 10 zum quer Abdichten des rohrförmigen Verpackungsmaterials (29).

12. Verfahren zum quer Abdichten eines gasdurchlässigen, rohrförmigen Verpackungsmaterials (29), das ein Füllmaterial (43) umschließt, das Verfahren umfassend
a) Entfernen von Füllmaterial (43) aus einer Dichtungsregion (35) des rohrförmigen Verpackungsmaterials (29) durch Blasen des Füllmaterials (43) weg von der Dichtungsregion (35), wobei das Blasen von einer Außenseite des rohrförmigen Verpackungsmaterials (29) durch das rohrförmige Verpackungsmaterial (29) hindurch durchgeführt wird,
b) Bereitstellen einer Querdichtung (33) an das rohrförmige Verpackungsmaterial (29) in der Dichtungsregion (35) des rohrförmigen Verpackungsmaterials (29), wobei vorzugsweise Schritt a genau vor und/oder während Durchführens von Schritt b durchgeführt wird,
**dadurch gekennzeichnet, dass**
das Blasen durch einen Gasstutzen (19) durchgeführt wird, der das rohrförmige Verpackungsmaterial (29) umgibt oder im Wesentlichen umgibt.

13. Verfahren nach Anspruch 12, wobei Schritt b oder Schritte a und b während gemeinsamen Bewegens mit dem sich vorwärtsbewegenden rohrförmigen Verpackungsmaterial (29) durchgeführt wird/werden.

14. Verfahren nach Anspruch 12 oder 13, wobei das Blasen durch Blasen von Gas unter einem Winkel α in Bezug auf eine Laufrichtung (DT) des rohrförmigen Verpackungsmaterials (29) durchgeführt wird, wobei der Winkel α die Vorgabe 0° < α ≤ 90°, vorzugsweise 1° ≤ α ≤ 60°, nochmals bevorzugt 3° < α ≤ 30°, besonders bevorzugt 5° ≤ α ≤ 15° erfüllt.

15. Verfahren nach einem der Ansprüche 12-14, wobei das Blasen auf eine pulsierende Weise durchgeführt wird.

16. Verfahren nach einem der Ansprüche 12-15, wobei Schritt a zusätzlich durch Vibrieren des rohrförmigen Verpackungsmaterials (29) und/oder Bereitstellen einer stehenden Welle in dem rohrförmigen Verpackungsmaterial (29) durchgeführt wird.

17. Verfahren zum Herstellen eines im Beutel verpackten Produkts (39), z.B. eines im Beutel verpackten oralen Schnupfprodukts,
das Verfahren umfassend
- Zuführen und vorwärtsbewegen eines Netzes (47) eines gasdurchlässigen Verpackungsmaterials,
- Zuführen eines Füllmaterials (43) an das sich vorwärtsbewegende Netz (47),
- Anordnen des sich vorwärtsbewegenden Netzes (47) in eine rohrförmige Form, um das Füllmaterial (43) einzuschließen, wobei das Anordnen vor oder nach Zuführen des Füllmaterials (43) durchgeführt wird,
- als eine Option, Bereitstellen des rohrförmig angeordneten Verpackungsmaterials (29) mit einer Längsdichtung (55) und
- Bereitstellen des rohrförmigen Verpackungsmaterials (29) mit einer Querdichtung (33) folgend dem Verfahren nach einem der Ansprüche 12-16.

## Revendications

1. Dispositif de soufflage (1) pour le soufflage de gaz au travers d'un matériau d'emballage (29) tubulaire perméable au gaz,
ledit dispositif de soufflage (1) comprend
- au moins une buse de gaz (19), adaptée pour souffler du gaz d'un extérieur dudit matériau d'emballage tubulaire (29) au travers dudit matériau d'emballage tubulaire (29), et
- un élément de guidage (3),
dans lequel ledit élément de guidage (3) comprend un passage de bande (5) présentant une surface (7) adaptée pour faire face audit matériau d'emballage tubulaire (29) de sorte que ledit passage de bande (5) entoure ou entoure sensiblement ledit matériau d'emballage tubulaire (29),
**caractérisé en ce que**
ladite buse de gaz (19) est adaptée pour entourer ou entourer sensiblement ledit matériau d'emballage tubulaire (29).

2. Dispositif de soufflage (1) selon la revendication 1, dans lequel ladite au moins une buse de gaz (19) est dirigée selon un angle a par rapport à une direction de déplacement (DT) dudit matériau d'emballage tubulaire (29), dans lequel ledit angle a satisfait à l'exigence 0° < α ≤ 90°, de préférence 1° ≤ α ≤ 60°, de manière davantage préférée 3° < α ≤ 30°, de manière préférée entre toutes 5° ≤ α ≤ 15°.

3. Dispositif de soufflage (1) selon l'une quelconque des revendications précédentes, dans lequel ledit passage de bande (5) dudit élément de guidage (3) est conique, cylindrique ou en forme d'entonnoir.

4. Dispositif de soufflage (1) selon l'une quelconque des revendications précédentes, dans lequel ladite buse de gaz (19) présente une forme circulaire, ovale ou elliptique.

5. Dispositif de soufflage (1) selon l'une quelconque des revendications précédentes, dans lequel une paroi latérale intérieure (21) de ladite buse de gaz (19) est au moins partiellement constituée par une portion d'élément de guidage (3) formant ledit passage de bande (5).

6. Dispositif de soufflage (1) selon l'une quelconque des revendications précédentes, dans lequel ladite paroi latérale intérieure (21) et/ou une paroi latérale extérieure (23) de ladite buse de gaz (19) est dotée d'une ou de plusieurs nervures (25) et/ou rainures.

7. Dispositif de soufflage (1) selon l'une quelconque des revendications précédentes, dans lequel ledit dispositif de soufflage (1) comprend une fente raccordant ledit passage de bande à un extérieur dudit dispositif de soufflage (1).

8. Utilisation d'un dispositif de soufflage (1) selon l'une quelconque des revendications précédentes pour le soufflage de gaz d'un extérieur d'un matériau d'emballage tubulaire (29) au travers dudit matériau d'emballage tubulaire (29).

9. Agencement d'étanchéité (27, 71) pour rendre étanche transversalement un matériau d'emballage tubulaire perméable au gaz (29), ledit agencement d'étanchéité (27, 71) comprenant
- un dispositif d'étanchéité (31) pour doter ledit matériau d'emballage tubulaire (29) d'un joint transversal (33), et
- un dispositif de soufflage (1, 73) comprenant au moins une buse de gaz (19 ; 75, 77) agencée pour souffler un gaz d'un extérieur dudit matériau d'emballage tubulaire (29) au travers dudit matériau d'emballage tubulaire (29),
**caractérisé en ce que**
ladite buse de gaz (19) est adaptée pour entourer ou entourer sensiblement ledit matériau d'emballage tubulaire (29), et
ledit dispositif de soufflage (1, 73) est agencé en amont dudit dispositif d'étanchéité (31) avec ladite buse de gaz (19 ; 75, 77) adaptée pour souffler ledit gaz sur ledit matériau d'emballage tubulaire (29) de sorte que ledit gaz touche ledit matériau d'emballage tubulaire (29) sur ou de manière adjacente audit dispositif d'étanchéité (31).

10. Agencement d'étanchéité (27, 71) selon la revendication 9, adapté pour être déplacé conjointement avec ledit matériau d'emballage tubulaire (29) dans ladite direction de déplacement (DT) dudit matériau d'emballage tubulaire (29).

11. Agencement (37) pour la fabrication de produits en sachet (39), par exemple de produits à priser oraux en sachet, lesdits produits en sachet (39) comprenant un matériau d'emballage perméable au gaz (41) renfermant un matériau de remplissage (43), ledit agencement comprenant
- une première unité d'alimentation (45) pour alimenter en une bande qui avance (47) dudit matériau d'emballage,
- une seconde unité d'alimentation (49) pour alimenter en dit matériau de remplissage (43) ladite bande qui avance (47),
- une unité d'enceinte (51) pour agencer ladite bande (47) de matériau d'emballage (29) sous une forme tubulaire, formant ainsi un matériau d'emballage tubulaire (29),
- en tant qu'option un dispositif d'étanchéité longitudinal (53) pour doter ledit matériau d'emballage agencé (29) d'un joint longitudinal (55), et
- un agencement d'étanchéité (27, 71) selon la revendication 9 ou 10 pour rendre étanche transversalement ledit matériau d'emballage tubulaire (29).

12. Procédé pour rendre étanche transversalement un matériau d'emballage tubulaire perméable au gaz (29) qui renferme un matériau de remplissage (43), ledit procédé comprenant
a) le retrait du matériau de remplissage (43) d'une région de joint (35) dudit matériau d'emballage tubulaire (29) par soufflage dudit matériau de remplissage (43) loin de ladite région de joint (35), dans lequel ledit soufflage est réalisé depuis un extérieur dudit matériau d'emballage tubulaire (29) au travers dudit matériau d'emballage tubulaire (29),
b) la fourniture d'un joint transversal (33) audit matériau d'emballage tubulaire (29) dans ladite région de joint (35) dudit matériau d'emballage tubulaire (29), de préférence l'étape a étant réalisée juste avant et/ou pendant la réalisation de l'étape b,
**caractérisé en ce que**
ledit soufflage est réalisé par une buse de gaz (19) entourant ou entourant sensiblement ledit matériau d'emballage tubulaire (29).

13. Procédé selon la revendication 12, dans lequel l'étape b ou les étapes a et b est/sont réalisée(s) tout en se déplaçant conjointement avec ledit matériau d'emballage tubulaire qui avance (29).

14. Procédé selon la revendication 12 ou 13, dans lequel ledit soufflage est réalisé par soufflage de gaz selon un angle α par rapport à une direction de déplacement (DT) dudit matériau d'emballage tubulaire (29), dans lequel ledit angle α satisfait à l'exigence 0° < α ≤ 90°, de préférence 1° ≤ α ≤ 60°, de manière davantage préférée 3° < α ≤ 30°, de manière préférée entre toutes 5° ≤ α ≤ 15°.

15. Procédé selon l'une quelconque des revendications 12 à 14, dans lequel ledit soufflage est réalisé de manière pulsée.

16. Procédé selon l'une quelconque des revendications 12 à 15, dans lequel l'étape a est en outre réalisée par vibration dudit matériau d'emballage tubulaire (29) et/ou fourniture d'une onde stationnaire dans ledit matériau d'emballage tubulaire (29).

17. Procédé de fabrication d'un produit en sachet (39), par exemple un produit à priser oral en sachet,
ledit procédé comprenant
- l'alimentation et l'avance d'une bande (47) d'un matériau d'emballage perméable au gaz,
- l'alimentation en un matériau de remplissage (43) de ladite bande qui avance (47),
- l'agencement de ladite bande qui avance (47) sous une forme tubulaire pour renfermer ledit matériau de remplissage (43), ledit agencement étant réalisé avant ou après l'alimentation dudit matériau de remplissage (43),
- en tant qu'option la dotation dudit matériau d'emballage agencé sous forme tubulaire (29) d'un joint longitudinal (55), et
- la dotation dudit matériau d'emballage tubulaire (29) d'un joint transversal (33) suivant le procédé selon l'une quelconque des revendications 12 à 16.
